# EUROPEAN PATENT APPLICATION

(11) **EP 3 318 344 A1**
(43) Date of publication of application: **09.05.2018**
(21) Application number: 16460080.1
(22) Date of filing: 08.11.2016
(51) Int. Cl.: B21D 22/00, B44B 5/00, B60R 13/10

(54) **A UNIT FOR THE STAMPING OF METAL PLATES FOR THE MANUFACTURING OF VEHICLE LICENSE PLATES**

(71) Applicant: UTAL Sp. z o.o., 62-006 Kobylnica (PL)
(72) Inventor: Redmerski, Jaroslaw, PL 61-608 Poznan (PL); Kwasniewski, Krzysztof, PL 61-131 Poznan (PL); Jarzina, Dariusz, PL 61-161 Poznan (PL); Wydmuch, Jacek, PL 61-287 Poznan (PL); Grzelak, Kamil, PL 62-060 Steszew (PL)
(74) Representative: Luczak, Jerzy

(57) **Abstract**

The subject of the invention is a unit for the stamping of metal plates for the manufacturing of vehicle license plates, used in manufacturing plants of vehicle license plates and other three-dimensional plates.

It is characterized in that in the store area (2) a manipulator (4) is located, which is a die (1) gripper (5) mounted on tracks, whereas each of the grippers (5) is equipped with an actuator (6) for moving between the operational position and the die (1) neutral (transport) position, whereas the gripper (5) unit is mounted in a sliding manner on the tracks (8) and powered by transmission belts which move the gripper (5) unit horizontally, along the die (1) store (2) and the die (1) pressure actuator (12), and the ends of the cradle are placed in a sliding manner on stands (9) with tracks for vertical movement of the gripper (5) cradle (8), whereas the transmission belts for the movement of the grippers (5) and the transmission belts for the movement of the cradle (9) are powered by servomotors (10) connected to the controller (11) which also controls the operation of gripper (5) actuators, of a press (13) actuator (12) supplied by a hydraulic pomp operated by a servomotor, and of an unprocessed plate movement mechanism (14), as well as a voltage power supply for a magnetic table (7).

## Description

The subject of the invention is a unit for the stamping of metal plates for the manufacturing of vehicle license plates, used in manufacturing plants of vehicle license plates and other three-dimensional plates.

A device is known presented in the PL 218189 patent description used to manufacture coated metal plates containing a heating element, electric and pneumatic supply system and control system, a metal band transport system with a metal band feeding device and metal band movement detectors, which combines in a sequence: a metal band straightening device, laminating device with a laminate feeder, press, cutter, whereas the heating element, control system, metal band transport system, metal band straightening device, laminating device are supplied by the electric power supply, and the press and cutter are suplied by the pneumatic and electric power supply, characterised in that the heating element is placed directly above the metal band transport system, advantageously at the press entry point, and equipped with a source of electromagnetic waves, advantageously infrared waves.

The essence of the invention, being a unit for the stamping of metal plates in the form of a store of negative and positive dies with marks and an actuator for exerting pressure on the dies, consists of a manipulator located in the store area, which is a die gripper mounted on tracks, whereas each of the grippers is equipped with an actuator for moving between the operational position and the die neutral (transport) position, whereas the gripper unit is mounted in a sliding manner on the tracks and powered by transmission belts which move the gripper unit horizontally, along the die store and the die pressure actuator, and the ends of the cradle are placed in a sliding manner on stands with tracks for vertical movement of the gripper cradle, whereas the transmission belts for the movement of the grippers and the transmission belts for the movement of the cradle are powered by servomotors connected to a controller which also controls the operation of gripper actuators, of a press actuator supplied by a hydraulic pomp operated by a servomotor, and of an unprocessed plate movement mechanism, as well as a voltage power supply for a magnetic table.

The use of the solution presented in the invention enables the following technical and utility effects:
- the possibility of rapidly completing a set of dies for the stamping of characters on the plate,
- the possibility of rapidly searching and selecting of dies from the die store,
- the possibility of rapidly returning the die to a specific, permanent location in the die store after the stamping process ends,
- the possibility of programming a system for completing sets of dies for plate stamping,
- high efficiency of the system,
- low costs of the plate manufacturing.

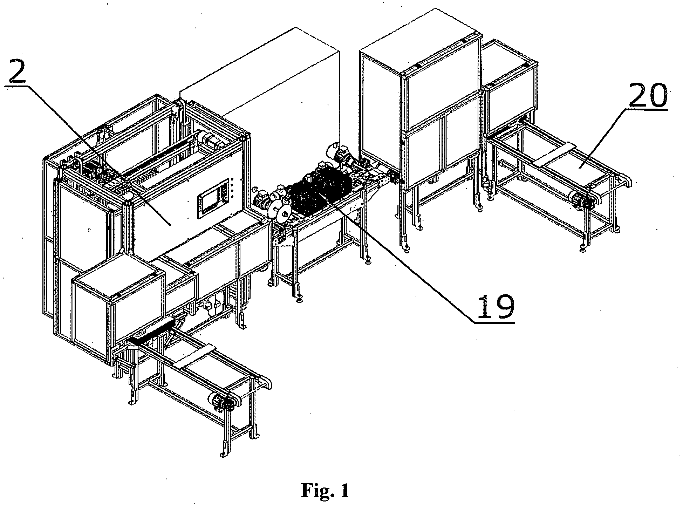

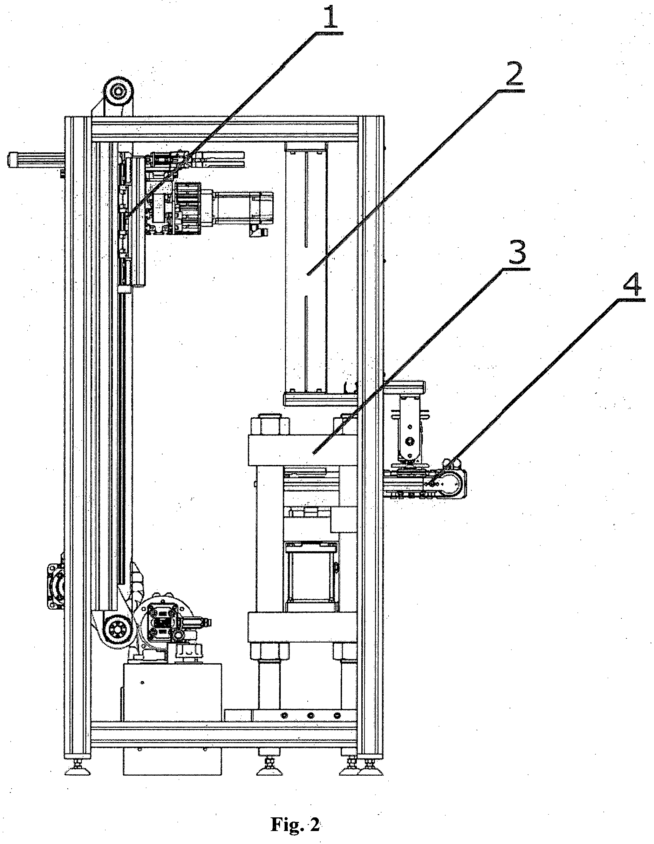

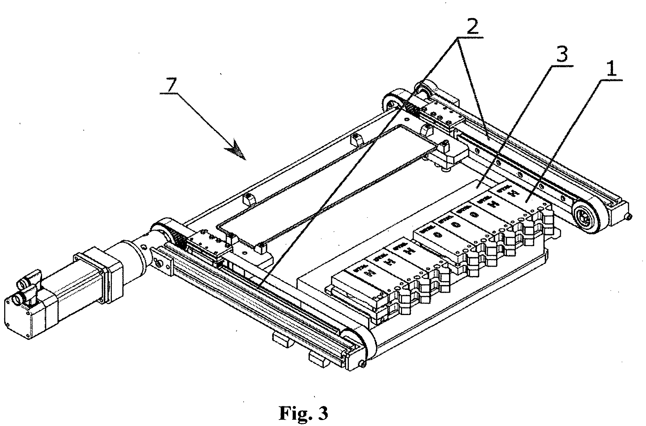

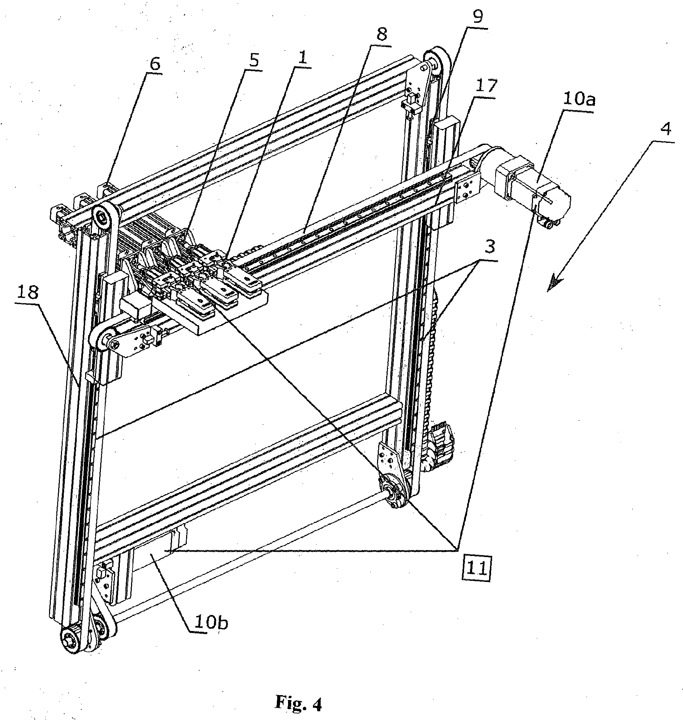

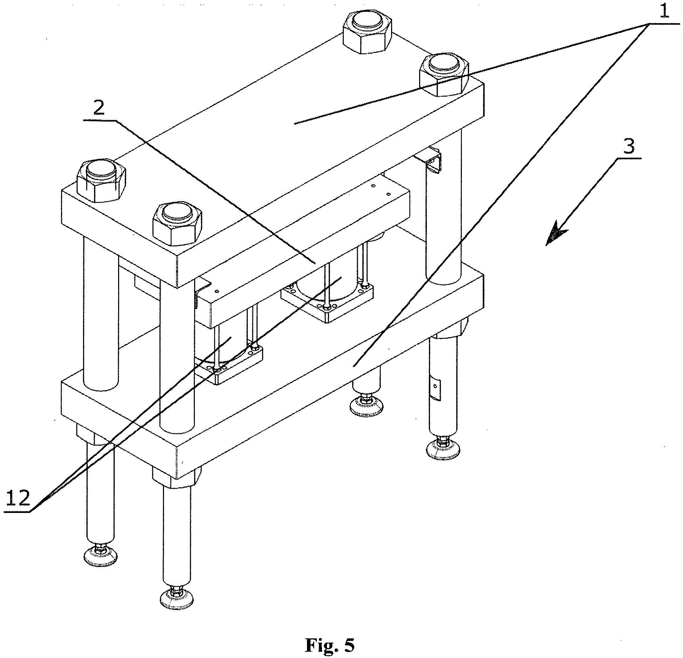

The subject of the invention, in an example, but not limiting, implementation was presented in diagrams on the figure where on fig. 1 a complete unit for stamping of metal plates is presented, on fig. 2 the feeding and stamping module is presented, on fig. 3 the manipulator unit is presented, on fig. 4 the press unit is presented, whereas on fig. 5 the pressing tray is presented.

The unit for the stamping of metal plates for the manufacturing of a vehicle license plate is a unit of elements which creates a process chain, during which a specific set of letters and signs is stamped on flat plates, manufacturing the vehicle license plate. This unit is composed of a positive and negative character die 1 store 2, and of an actuator 3 which exerts pressure on the dies. In the zone of store 2 the manipulator 4 is placed, which is a die 1 gripper 5 mounted on tracks, whereas each of the grippers 5 has an actuator 6 for moving between the die 1 store 2 and the magnetic table 7 for the placement of dies 1, whereas the gripper 5 unit is placed in a moving manner on a belt cradle 8 for the movement of the gripper 5 unit along the die 1 store 2, and the ends of the cradle 8 are placed in a sliding manner on stands 9 for vertical movement of the gripper 5 cradle 8, whereas the belts for the movement of the grippers 5 cradle 8 and the transmission belts for the movement of the cradle 9 are powered by servomotors 10 connected to a controller 11 which also controls the operation of gripper 5 actuators 6 and the press 13 actuator 12 supplied by a hydraulic pomp operated by a servomotor, and of an unprocessed plate movement mechanism 14, as well as a voltage power supply 15 for the magnetic table 7.

The flat sheets of metal prepared earlier with dimensions of a vehicle license plate are placed on the unprocessed plate feeder 16. The grippers 5 remove the dies from the die 1 store 2 according to the programmed sequence and place them on a magnetic table. The movement of the grippers 5 is enabled by the manipulator unit 4, which by moving over the horizontal track 17 and vertical track 18, which enables the placement of the gripper 5 right in front of the appropriate slot of the die 1 store 2, the gripping of the die 1 and its placement at an appropriate place of the magnetic table 7. The grippers 5 are positioned by the magnetic field forces exerted by the magnetic table 7. Then a flat plate is moved into the slot between the dies 1. After placing the flat plate in the dies the plate is stamped by the press 3 acting on the dies 1. The plate shaping process occurs. After the stamping process the shaped plate is moved to the foil wrap station 19 and the finished plate receiving station 20. The grippers place the dies back in the specific locations of the store 2.

## Claims

1. A unit for the stamping of metal plates in the form of a store of negative and positive dies with marks and an actuator for exerting pressure on the dies, **characterized in that** in the store area (2) a manipulator (4) is located, which is a die (1) gripper (5) mounted on tracks, whereas each of the grippers (5) is equipped with an actuator (6) for moving between the operational position and the die (1) neutral (transport) position, whereas the gripper (5) unit is mounted in a sliding manner on the tracks (8) and powered by transmission belts which move the gripper (5) unit horizontally, along the die (1) store (2) and the die (1) pressure actuator (12), and the ends of the cradle are placed in a sliding manner on stands (9) with tracks for vertical movement of the gripper (5) cradle (8), whereas the transmission belts for the movement of the grippers (5) and the transmission belts for the movement of the cradle (9) are powered by servomotors (10) connected to the controller (11) which also controls the operation of gripper (5) actuators, of a press (13) actuator (12) supplied by a hydraulic pomp operated by a servomotor, and of an unprocessed plate movement mechanism (14), as well as a voltage power supply for a magnetic table (7).
